# EUROPÄISCHE PATENTSCHRIFT

(11) **EP 2 048 557 B1**
(45) Veröffentlichungstag und Bekanntmachung des Hinweises auf die Patenterteilung: **27.03.2013**
(21) Anmeldenummer: 07118268.7
(22) Anmeldetag: 11.10.2007
(51) Int. Cl.: G05B 19/4061, B25J 9/16, F16P 3/14

(54) **Optoelektronischer Sensor und mobile Vorrichtung sowie Verfahren zur Konfiguration**
Optoelectronic sensor and mobile device and configuration method
Capteur optoélectronique et dispositif mobile ainsi que son procédé de configuration

(43) Veröffentlichungstag der Anmeldung: 15.04.2009
(73) Patentinhaber: SICK AG, 79183 Waldkirch (DE)
(72) Erfinder: Braune, Ingolf, 79194 Gundelfingen (DE); MacNamara, Dr. Shane, 79285 Ebringen (DE)
(74) Vertreter: Ludewigt, Christoph

(56) Entgegenhaltungen:
- EP-A- 1 367 314
- EP-A- 1 521 211
- EP-A- 1 544 535
- DE-A1- 10 324 627
- DE-A1-102005 063 217
- PETTERSEN T ET AL: "Augmented reality for programming industrial robots" MIXED AND AUGMENTED REALITY, 2003. PROCEEDINGS. THE SECOND IEEE AND ACM INTERNATIONAL SYMPOSIUM ON 7-10 OCT. 2003, PISCATAWAY, NJ, USA,IEEE, 7. Oktober 2003 (2003-10-07), Seiten 319-320, XP010662847 ISBN: 0-7695-2006-5

## Beschreibung

Die Erfindung betrifft einen optoelektronischen Sensor zur Überwachung eines Raumbereichs nach dem Oberbegriff von Anspruch 1 und eine mobile Vorrichtung sowie ein Verfahren zur Konfiguration von Teilbereichen des Sichtbereichs des optoelektronischen Sensors nach den Oberbegriffen von Anspruch 5 beziehungsweise 16.

Zur Überwachung von Bereichen oder Räumen sowie besonders von Gefahrenstellen können Schutzeinrichtungen eingesetzt werden. Eine besonders genaue Überwachung ist dabei mit dreidimensionalen Kamerasensoren möglich, die an einer Aufnahme montiert und auf den Überwachungsbereich ausgerichtet werden und die auf verschiedenen Verfahren wie Stereoskopie, Triangulation, Lichtlaufzeit, der Störung passiver zweidimensionaler Muster, der Auswertung von projizierten Beleuchtungsmuster und weiteren Verfahren basieren können. Ziel der Überwachung ist jeweils die Erkennung eines als kritisch eingestuften Zustandes innerhalb des dreidimensionalen Raumes, der dann zu einer Warnung oder einer Absicherung einer Gefahrenquelle etwa in Form einer sicherheitsgerichteten Abschaltung führt. Ähnliche Verfahren sind auch basierend auf Laserscannern und jeweils im zweidimensionalen Fall bekannt.

In der Sicherheitstechnik wünscht man sich im Rahmen einer vollständig integrierten Mensch-Maschine-Interaktion eine variable, flexible Schutzhülle um sämtliche Gefährdungsquellen, wie etwa bewegte mechanische Teile oder Roboter. Solche dynamischen Schutzfelder erfordern komplexe Bildauswertungen, welche im Betrieb die zulässigen Bewegungen der Maschine von unzulässigen Eingriffen durch Bedienpersonal oder Fehlfunktionen anderer Maschinen zuverlässig unterscheiden können. Derartige Systeme sind für die Praxis noch nicht weit genug ausgereift, um in der Sicherheitstechnik erfolgreich eingesetzt werden zu können. Erkennungsfehler bei der Bildauswertung würden die Gesundheit des Bedienpersonals gefährden oder, wenn man dies sicher vermeiden möchte, durch gehäufte Fehlalarme zu sehr hohen Ausfallzeiten führen. Daher bleibt nur der Ausweg, Schutzfelder vorzukonfigurieren und allein diese Schutzfelder auf unzulässige Objekteingriffe zu überwachen, also Grenzen zu Schutzbereichen, flächigen Schutzfeldern oder dreidimensionalen Schutzvolumina festzulegen und diese zu überwachen.

Im Bereich zweidimensionaler Überwachungen ist bekannt, in einem CAD-ähnlichen Programm mit grafischer Benutzeroberfläche Schutzfelder aufzuziehen oder einzugeben, wobei die Benutzeroberfläche Modelle oder Bilder der Arbeitsräume darstellt, so dass Schutzfelder und Verknüpfungen definiert und in die Sensoren, Steuerungen und Aktoren übertragen werden können. Ähnlich lassen sich auch im Bereich dreidimensionaler Bewachungssensoren in einem CAD-ähnlichen Konfigurationsmenü schutzwallartige dreidimensionale Schutzfelder definieren. Diese Definition der Lage eines Schutzfeldes innerhalb des dreidimensionalen Raumes muss nach der Installation, also vor Ort in der benötigten Anwendung erfolgen. Je komplexer ein Schutzfeld ist, desto schwieriger ist das zu gewährleisten.

Die Bedienung der CAD-Oberfläche erfordert Fachkenntnisse. Die mehrdimensionale geometrische Konfiguration muss aus verschiedenen Perspektiven betrachtet werden, und es ist jeweils ein Umdenken auf die jeweilige Ansicht erforderlich. Ein Drehen oder Schwenken der Ansichten kann zu zusätzlichen Verwirrungen führen. Selbst mit den erforderlichen Kenntnissen ist die Konfiguration immer noch sehr zeitaufwändig, besonders wenn komplexe Bewegungsabläufe etwa eines Freiarmroboters berücksichtigt werden müssen. Um Sicherheitsmängel bei unzulänglicher Konfiguration zu vermeiden, werden die Schutzfelder daher oft zu großzügig angelegt, was zu unnötig häufigen Fehlalarmen und damit Ausfallzeiten führt.

Ein Beispiel für ein derartiges Konfigurationsverfahren ist in der DE 10 2005 063217 A1 offenbart. Bei dieser Konfiguration sind aber Setupmarken notwendig, die vor der Bildaufnahme in dem überwachten Raumbereich platziert werden müssen, und es wird nur eine begrenzte Klasse von Geometrieelementen angeboten, aus denen die zu konfigurierenden Schutzfelder ausgewählt werden müssen. Außerdem ist aufgrund der unterschiedlichen Perspektiven nicht unmittelbar klar, ob ein konfigurierter Schutzbereich überhaupt eine Sichtlinie zum Sensor hat. Dies ist einer der Nachteile davon, dass die Konfiguration und die Kontrolle nicht in der realen Welt erfolgt, sondern an einem Bildschirm. Die Konfiguration erfolgt also aufgrund einer Modelldarstellung und ist dadurch aufwändig und fehleranfällig.

In der US 6,297,844 B1 wird ein dreidimensionaler Lichtvorhang aufgezogen, und innerhalb des Überwachungsbereichs werden Objekte und deren Bahn vorab als Referenz eingelernt, sofern sie keine Sicherheitsfunktion auslösen sollen, und im Betrieb solche Objekte als unzulässig erkannt, deren Bewegung und Positionen von den eingelernten Referenzen abweicht. Auch hier sind also keine Schutzbereiche definiert, sondern der gesamte Raumbereich wird überwacht. Somit sind erneut sehr komplexe Bildauswertungen über den gesamten Sichtbereich erforderlich, die durch eine verhältnismäßig hohe Fehlerrate zu Ausfallzeiten führen.

Der Fachaufsatz "Augmented reality for programming industrial robots" von Pettersen et al. aus "Mixed and augmented reality 2003", proceedings of the second IEEE and ACM International Symposium, IEEE 7.10.2003 Seiten 319-320, ISBN 0-7695-2006-5 befasst sich mit der vereinfachten Programmierung von Robotersteuerungen durch augmented reality. Dabei werden ein Zielobjekt und ein Eingabe-Handgerät jeweils mit Markierungen versehen, um deren 3D-Lage im Raum mittels einer am Kopf des Benutzers befestigten Kamera zu ermitteln. Ein Computer berechnet die Lage des Kopfes bzw. eines HMD (head mounted display) einerseits und die Lage des Eingabe-Handgeräts andererseits gegenüber dem Raum. Dadurch ist ermöglicht, die Posen des Eingabe-Handgeräts gegenüber dem Zielobjekt als Sequenz von Wegpunkten einzulernen und gleichzeitig die resultierenden virtuellen Roboterposen mit dem realen Sichtfeld in dem HMD zu überblenden.

Die EP 1 521 211 A2 zeigt ein Verfahren zum Bestimmen von Posen einer Bildempfangseinrichtung, um das System in die Lage zu versetzen, ein virtuelles Objekt im Rahmen von augmented reality in der richtigen Pose in den Sichtbereich einzublenden. In einer Ausführungsform trägt der Benutzer ein Handgerät, auf welchem reale, durch eine Kamera des Handgeräts aufgenommene Werkstücke in einer Roboterbahn mit dem virtuell eingeblendeten Roboter dargestellt werden können. Damit der Roboter dabei in der richtigen Pose dargestellt wird, muss wiederum die Pose des Handgeräts ermittelt werden, was durch das Verfahren gemäß D3 mit Hilfe einer Referenzmarke des Handgeräts durch einen eigenen zweiten Roboter mit einer zweiten Kamera geschieht.

Vor dem Hintergrund dieses Standes der Technik ist Aufgabe der Erfindung, eine einfache Konfiguration von beliebigen Feld- oder Volumenelementen für Sensorsysteme anzugeben.

Diese Aufgabe wird durch einen Sensor nach Anspruch 1, eine mobile Vorrichtung nach Anspruch 5 sowie ein Verfahren nach Anspruch 16 gelöst. Durch die Kommunikation mit einem Handgerät, welches in dem realen zu überwachenden Raumbereich bewegt und dessen Position im Raum als Bezugspunkt für die Definition eines Teilbereiches herangezogen wird, kann unmittelbar und ohne Verfälschung durch die Perspektive der Kamera ein gewünschter Teilbereich ausgewählt werden. Bestimmt der Sensor die Position des Handgeräts, so wird unmittelbar die Sichtbarkeit des Referenzziels, nämlich des Handgeräts, während der Konfiguration geprüft. Damit werden Konfigurationsfehler vermieden, die darauf beruhen, dass der Sensor einen zu definierenden Teilbereich gar nicht sehen oder auflösen kann.

Dabei geht die Erfindung von dem Prinzip aus, sich bei der Konfiguration von einem Objekt unmittelbar am Ort des zu definierenden Teilbereichs zu orientieren. Durch diesen realen Bezug wird die Konfiguration intuitiver, praxisnäher, einfacher zu erreichen, weniger fehleranfällig und einfacher zu testen, so dass Fehler bei der Konfiguration vermieden werden können.

In dem oder verbunden mit dem erfindungsgemäßen Sensor ist vorteilhafterweise eine Wam- und Absicherungseinrichtung vorgesehen, welche auf Detektion der Sensorsteuerung eines unzulässigen Eingriffs in einen Teilbereich eine Warnung ausgeben oder die Gefahrenquelle absichern kann, und die Sensorsteuerung und die Konfigurationseinrichtung sind dafür ausgebildet, Teilbereiche als Schutzbereiche, Wambereiche, Mutingbereiche oder Blankingbereiche festzulegen. Damit kann der Sensor die klassische sicherheitstechnische Anwendung der Absicherung einer Gefahrenquelle erfüllen, um Unfälle zu vermeiden.

Da jedes Abschalten bei Eingriff in ein Schutzfeld Ausfallzeiten der abgesicherten Maschine nach sich zieht, können auch Warnbereiche vorgesehen sein, wo die Sensorsteuerung bei Erkennen eines Eingriffs zunächst noch ein Warnsignal erzeugt, beispielsweise um einen Benutzer dazu zu bringen, die Gefahrenzone rechtzeitig zu verlassen. Sofern der Benutzer auf diese Warnung nicht reagiert, ist die Gefahrenquelle dabei zusätzlich von einem Schutzbereich umgeben, der bei zu großer Annäherung die rechtzeitige Absicherung garantiert. Mutingbereiche sind solche Bereiche, in denen ein Eingriff zumindest durch bestimmte Objekte zu einer meist vorübergehenden Überbrückung der Sicherheitsfunktion führt. Damit können nicht gefährdete Objekte oder Bewegungsmuster zugelassen werden. Ein Blankingbereich schließlich ist ein Bereich, der für gewöhnlich Teil eines Schutzbereiches ist, in dem ein Eingriff aber zu keiner Absicherung führt. Dies kann etwa dazu dienen, eine Palette bekannter geometrischer Konstruktion passieren zu lassen, Bedienpersonal dagegen nicht. Durch diese verschiedenen Typen von Teilbereichen kann der Sensor wesentlich flexibler konfiguriert werden, um Ausfallzeiten möglichst gering zu halten und bestimmte automatisierte Bewegungsabläufe ohne Einbuße der Sicherheit zuzulassen.

Der Sensor weist bevorzugt einen pixelaufgelösten zeilen- oder matrixförmigen Bildsensor auf, ist insbesondere ein visueller 3D-Sensor nach dem Prinzip der Stereoskopie, der aktiven Triangulation oder der Lichtlaufzeit, oder der Sensor ist ein Laserscanner. Dies alles sind bekannte und robuste Möglichkeiten, mittels eines Sensors zwei- oder dreidimensionale Bilddaten des Raumbereichs zu erzeugen, mit deren Hilfe Objekteingriffe erkannt werden können.

In vorteilhafter Weiterbildung weist der Sensor eine Auflösungstesteinrichtung auf, die dafür ausgebildet ist zu überprüfen, ob ein Referenzziel an dem Handgerät noch optisch aufgelöst werden kann, wobei die Größe dieses Referenzziels einer gewünschten Sicherheitsstufe entspricht, insbesondere Körperschutz, Armschutz oder Fingerschutz, und wobei die Auflösungstesteinrichtung weiterhin dafür ausgebildet ist, unmittelbar per optischem oder akustischem Signal oder über die Sensordatenschnittstelle an das Handgerät eine Warnung auszugeben, wenn das Referenzziel nicht aufgelöst werden kann, insbesondere in einem festzulegenden Teilbereich. Auf diese Weise ist sichergestellt, dass in jedem konfigurierten Teilbereich die geforderte Sicherheitsstufe eingehalten wird. Es kann also nicht passieren, dass für einen Teilbereich beispielsweise Fingerschutz gefordert wird, das Auflösungsvermögen des Sensors an der bei der Konfiguration gewünschten Position innerhalb des Raumbereichs aber dafür gar nicht ausreicht. Damit ist eine wichtige Fehlerquelle bei der üblichen Konfiguration über einen Bildschirm unmittelbar überprüfbar ausgeschlossen.

In der mobilen Vorrichtung ist die Positionsbestimmungseinrichtung bevorzugt dafür ausgebildet, Positionsdaten jeweils auf eine Benutzereingabe oder ein Signal des Sensors hin zu bestimmen, und/oder die Positionsbestimmungseinrichtung kann die aktuelle Position jeweils für einen Punkt oder kontinuierlich entlang Abschnitten der Bewegungsbahn der Vorrichtung bestimmen, und dabei ist die Handgerätsteuerung dafür ausgebildet, eine Grenzlinie oder eine Grenzfläche eines Teilbereichs entlang der Verbindung zwischen den Punkten, entlang der Abschnitte der Bewegungsbahn selbst, als deren jeweilige konvexe Hülle oder als kleinste einfache geometrische Form festzulegen, insbesondere Kreis, Kugel, Rechteck, Quader oder Zylinder, die eine Anzahl von Punkten oder einen Abschnitt der Bewegungsbahn umfasst. Damit hat der Benutzer eine Reihe von Auswahlmöglichkeiten, eine Grenzlinie beziehungsweise Grenzfläche je nach räumlichen Gegebenheiten und Anforderungen auf einfache Weise zu definieren.

Vorteilhafterweise weist die Positionsbestimmungseinrichtung einen elektromagnetischen Empfänger auf, um die aktuelle Position der Vorrichtung mittels externer elektromagnetischer Signale zu bestimmen, und/oder die Positionsbestimmungseinrichtung ist mit der Handgerätdatenschnittstelle verbunden, um die aktuelle Position der Vorrichtung von dem Sensor zu empfangen. Im erstgenannten Fall kann also die mobile Vorrichtung eigenständig ihre Position bestimmen und muss dafür nicht mit dem Sensor kommunizieren. Der zweite Fall ermöglicht, von der Lage und insbesondere der optischen Perspektive des Sensors auszugehen und auf dessen Rechenleistung zurückzugreifen, die nicht durch die Anforderung beschränkt ist, ein mobiles und somit leichtes Gerät zu sein.

Die mobile Vorrichtung weist bevorzugt ein Referenzziel auf, dessen Ausdehnung einem gewünschten Auflösungsvermögen des Sensors entspricht, insbesondere eine Kugel mit einem vorgegebenen Radius, wobei das Referenzziel austauschbar an der Vorrichtung angebracht ist. Man kann somit ein Referenzziel der gewünschten Ausdehnung wählen und einsetzen, beispielsweise derjenigen eines Fingers oder einer Hand, und wenn der Sensor das Referenzziel erkennt und dessen Position bestimmen kann, ist gleichzeitig gesichert, dass auch die Auflösung an der somit bestimmten Position ausreicht. Die geforderte Sicherheitsstufe wird dabei ohne jeglichen Zusatzaufwand automatisch garantiert.

In einer besonderen Weiterbildung weist die Vorrichtung eine Auswahleinrichtung auf, welche die Auswahl einer geometrischen Form für einen Teilbereich ermöglicht, insbesondere eines Kreises, einer Kugel, eines Rechtecks, eines Quaders oder eines Zylinders, um einen Teilbereich mit der geometrischen Form an der aktuellen Position festzulegen, und/oder welche die Auswahl eines Typs eines Teilbereichs ermöglicht, insbesondere eines Schutzbereichs, eines Warnbereichs, eines Mutingbereichs oder eines Blankingbereichs. Damit kann der Benutzer nicht nur Punkte und Linien vorgeben, sondern auch die genannten und weitere einfache geometrische gewünschte Formen von Teilbereichen durch wenige charakterisierende Eigenschaften vorgeben. Die Auswahl der verschiedenen Typen von Bereichen erhöht die Flexibilität im späteren Betrieb des Sensors, wie oben beschrieben.

Bevorzugt weist die Vorrichtung eine Identifikationseinrichtung auf, welche dafür ausgebildet ist, die Funktionalität der Vorrichtung zumindest teilweise nur nach Authentifizierung freizugeben, insbesondere durch ein Passwort, ein akustisches Signal oder ein biometrisches Signal. Da die Gesundheit und das Leben von Bedienpersonal von der richtigen Konfiguration abhängt, muss sichergestellt sein, dass sie nicht von Unbefugten verändert wird. Dies kann durch jegliches bekannte Verfahren geschehen, wobei eine akustische Authentifizierung die gleichzeitige Handhabung der mobilen Vorrichtung vereinfacht und biometrische Authentifizierungen sowohl komfortabel wie besonders sicher sind.

Vorteilhafterweise weist die Vorrichtung eine Anzeige auf, insbesondere einen Anschluss für eine Datenbrille, um bereits definierte oder aktuell zu definierende Teilbereiche anzuzeigen und/oder Bedien- oder Auswahlmöglichkeiten anzuzeigen. Eine solche Anzeige ermöglicht die Überprüfung von und die Anpassung an bereits zuvor konfigurierte Teilbereiche. Insbesondere mittels einer Datenbrille kann sich der Benutzer bei der Konfiguration und Überprüfung der Schutzfelder und sonstigen Teilbereichen ein besonders intuitives und realistisches Bild machen. Die Anzeige kann außerdem dazu dienen, genannte und sonst übliche Bedien- oder Auswahlmöglichkeiten komfortabel zugänglich zu machen.

In einem Sicherheitssystem, welches einen erfindungsgemäßen Sensor und eine erfindungsgemäße mobile Vorrichtung aufweist, sind bevorzugt die Sensordatenschnittstelle und die Handgerätdatenschnittstelle drahtgebunden, insbesondere Ethernetschnittstellen, oder sie sind alternativ drahtlose Schnittstellen, insbesondere Bluetooth-, WLAN- oder Mobilfunkschnittstellen. Eine drahtgebundene Schnittstelle ist robust, hat einen hohen Datendurchsatz, ist vergleichsweise schwer zu manipulieren und belegt keine vielleicht anderweitig genutzten Kanäle. Wenn andererseits die Kabelverbindung störend ist, so können bewährte und weitere drahtlose Protokolle eingesetzt werden. Dabei weist das System bevorzugt eine Dockingstation für die mobile Vorrichtung auf, um eine Stromversorgung aufzuladen oder Software zu synchronisieren. Die mobile Vorrichtung kann dann, wenn sie nicht gebraucht wird, stets aufgeladen und steuerungsseitig auf dem Stand des Sensors gehalten werden. Dabei ist die Handgerätsteuerung bevorzugt dafür ausgebildet, als Bedienerschnittstelle für den Sensor während des Betriebs auch nach Abschluss der Konfiguration zu dienen. Ein einfaches Beispiel ist das Ein- und Ausschalten des Sensors, oder dessen Wartung beziehungsweise Software-Update. Gerade dreidimensionale Kameras sind oft relativ schwer zugänglich oberhalb einer Vorrichtung montiert, so dass deren Anzeige und Bedienelemente nicht unmittelbar erreichbar sind.

In dem Sicherheitssystem ist bevorzugt eine Anzeige vorgesehen, insbesondere eine Datenbrille, festgelegte oder mögliche festzulegende Teilbereiche anzuzeigen, insbesondere überblendet mit einer unmittelbaren Ansicht des Raumbereichs durch transparente Bereiche der Datenbrille oder mit einer elektronischen Darstellung des Raumbereichs aus einer wählbaren Perspektive. Damit kann der Benutzer entweder sein unmittelbares Sichtfeld des Raumbereichs mit bereits konfigurierten Teilbereichen sehen, oder er kann virtuell die Perspektive wechseln, ohne sich bewegen zu müssen, auch an Orte, die erhöht in der Luft liegen oder wegen Maschinen nicht leicht zugänglich sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Besonders vorteilhaft ist, wenn in diesem Verfahren die Teilbereiche als Schutzbereiche, Warnbereiche, Mutingbereiche oder Blankingbereiche festgelegt werden können, und auf Detektion eines unzulässigen Eingriffs
- in einen Schutzbereich eine Gefahrenquelle abgesichert wird,
- in einen Warnbereich eine Warnung ausgegeben wird,
- in einen Mutingbereich eine Sicherheitsfunktion zumindest vorübergehend überbrückt wird und
- in einen Blankingbereich innerhalb eines Schutzbereichs keine Absicherung erfolgt. Damit ist der Sensor in seiner Funktionalität im Betrieb wesentlich flexibler, kann mehr Anwendungen unterstützen und vermeidet Ausfallzeiten aufgrund von Fehlalarmen.

Bevorzugt werden weiterhin die konfigurierten Teilbereiche getestet, indem Eingriffe in die Teilbereiche vorgenommen werden und die Reaktion des Sensors überprüft wird, und wobei das Testobjekt insbesondere die mobile Vorrichtung ist. Unmittelbar nach Konfiguration eines oder mehrerer Teilbereiche kann somit von allen Seiten von der Bedienperson, die sowieso zu diesem Zeitpunkt vor Ort steht, mit deshalb nur sehr geringem Aufwand die Funktionalität und insbesondere die Sicherheitsfunktion des Sensors garantiert werden. Dabei ist nicht einmal ein zusätzlicher Testkörper notwendig, wenn die mobile Vorrichtung durch das Referenzziel ohnehin ein Testobjekt der gewünschten Größe zur Verfügung stellt. Dabei muss weder Referenzziel noch Testobjekt ein aufgesetzter Körper wie eine Kugel sein, alternativ kann das Handgerät selbst so wie es ist oder nach Anbringen von Mustern, Farben, Reflektoren oder ähnlichem als Testobjekt Verwendung finden.

Vorteilhafterweise werden die konfigurierten Teilbereiche nach der Konfiguration in der mobilen Vorrichtung, in einem unabhängigen Rechner und/oder in dem Sensor nachbearbeitet, korrigiert und/oder freigegeben. Damit können nicht nur Fehlkonfigurationen ohne erneutes vollständiges Durchlaufen des gesamten Verfahrens beseitigt oder Umkonfigurationen vorgenommen werden, manche Teilbereiche lassen sich auch durch Nachbearbeitung, etwa Kopieren, schneller definieren als durch jeweilige Positionsbestimmung der mobilen Vorrichtung. Ähnlich kann von Vorteil sein, auf einer vorgegebenen Konfiguration aufzusetzen, etwa einer ab Werk oder per Datenträger eingespielten oder einer früher abgespeicherten Konfiguration, und diese mit dem erfindungsgemäßen Verfahren anzupassen und zu erweitern. Die Freigabe schließlich kann durch einen Vorgesetzten, einen Sicherheitsbeauftragten oder einen externen Prüfer, auch durch die konfigurierende Bedienperson selbst erst dann vorgenommen werden, wenn die Konfiguration durch hinreichende Tests den Sicherheitsanforderungen genügt.

Als Alternative zu der Bewegung der mobilen Vorrichtung durch Bedienpersonal kann die mobile Vorrichtung bei der Konfiguration auch an einem Fahrzeug, einem Roboter oder einem Maschinenteil befestigt werden. Dies kann dazu dienen, eine später zu überwachende Bewegung eines Arbeitsgangs möglichst präzise und einfach aufzunehmen, aber auch dazu, schwerer zugängliche Bereiche abzudecken.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Ausführungsform des erfindungsgemäßen Sensors und dessen Überwachungsbereichs mit einem vorkonfigurierten Schutzfeld;
- Fig. 2: eine schematische Darstellung einer Ausführungsform der erfindungsgemäßen mobilen Vorrichtung;
- Fig. 3: eine schematische Draufsicht auf eine dynamische Schutzfeldkonfiguration;

- Fig. 4: eine schematische Draufsicht auf eine Teilbereichskonfiguration mit einem Schutzbereich, einem Warnbereich und einem beweglichen Blankingbereich; und
- Fig. 5: ein Ablaufdiagramm einer Ausführungsform des erfindungsgemäßen Verfahrens zur Konfiguration der Teilbereiche.

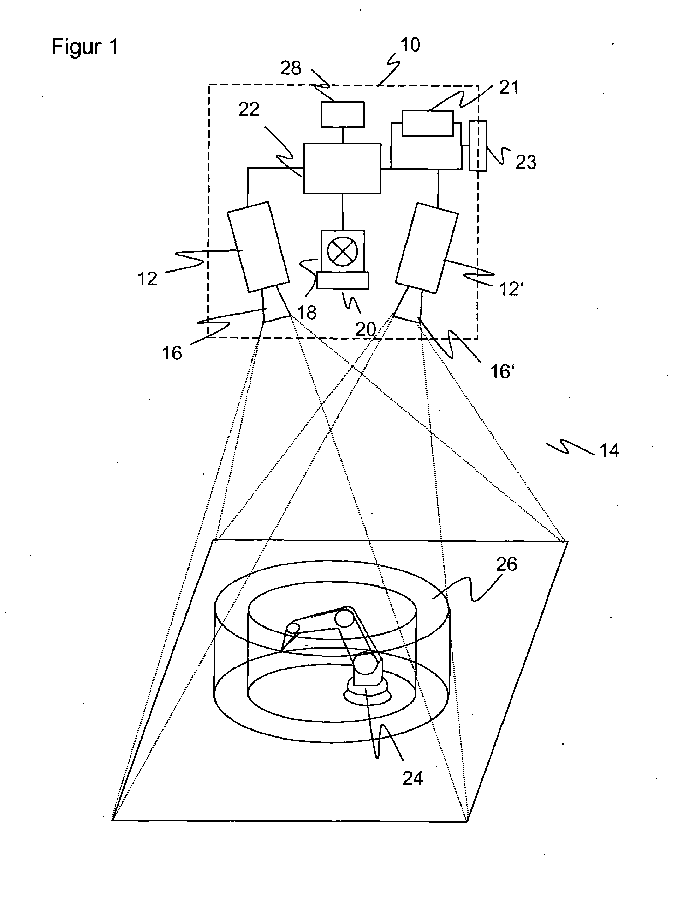

Figur 1 zeigt in einer schematischen dreidimensionalen Darstellung den Aufbau einer Ausführungsform des erfindungsgemäßen Sicherheitssensors 10 auf Basis von einer dreidimensionalen Stereoskopie-Kamera. Zwei Kameramodule 12, 12' sind in einem bekannten festen Abstand zueinander montiert. Beide Kameras 12, 12' nehmen jeweils das Bild eines Überwachungsbereichs 14 auf. Die Kameras 12, 12' weisen ein nur angedeutetes Objektiv 16, 16' mit einer abbildenden Optik auf. Der Sichtwinkel dieser Optik ist in Figur 1 durch gestrichelte Linien dargestellt, die jeweils eine Sichtpyramide bilden, und beträgt erfindungsgemäß beispielsweise 45°. In jeder Kamera 12, 12' ist ein nicht dargestellter Bildsensor vorgesehen. Dieser Bildsensor ist ein matrixförmiger Aufnahmechip, der ein rechteckiges Pixelbild aufnimmt, und kann beispielsweise ein CCD- oder ein CMOS-Sensor sein.

In der Mitte zwischen den beiden Kameras 12, 12' ist mindestens eine Beleuchtungsquelle 18 angeordnet. Als Lichtquelle für die Beleuchtungsquelle 18 dient ein Laser mit einer Leistung zwischen 20 und 100 mW. Die Laserleistung kann auch 1 W oder noch mehr betragen, sofern die Schutzklasse dies zulässt und die höheren Kosten in Kauf genommen werden. Alternativ ist auch der Einsatz einer oder mehrerer LEDs vorstellbar.

Der Beleuchtungsquelle 18 ist in der optischen Achse ein diffraktives optisches Element 20 nachgeordnet, um in dem Überwachungsbereich 14 ein Beleuchtungsmuster zu erzeugen. Die Beleuchtungsquelle 18 erzeugt Licht einer vorgegebenen und bekannten Wellenlänge, die im sichtbaren, ultravioletten oder infraroten Bereich liegen kann. Selektiv für diese Wellenlänge lenkt das diffraktive optische Element 20 das von der Beleuchtungsquelle 18 einfallende Licht nur in bestimmte Bereiche des Überwachungsbereichs 14 ab. Das entstehende Beleuchtungsmuster kann ein regelmäßiges, also matrixförmig angeordnetes, Punkt- beziehungsweise Kreismuster oder ein beliebiges anderes Muster sein.

Mit den beiden Kameras 12, 12' und der Beleuchtungsquelle 18 ist eine Steuerung 22 verbunden. Die Steuerung 22 schaltet die Lichtpulse der Beleuchtungsquelle 18 und empfängt Bildsignale von den beiden Kameras 12, 12'. Darüber hinaus berechnet die Steuerung 22 mit Hilfe einer stereoskopischen Disparitätsschätzung dreidimensionale Bilddaten des Raumbereichs 14. Die Steuerung 22 kann in den Sensor integriert, aber auch eine eigenständige, mit dem Sensor verbundene Einheit sein, etwa ein Computer.

Im von dem Sicherheitssensor 10 überwachten Raumbereich 14 befindet sich ein Roboterarm 24, der eine Gefahrenquelle darstellt. Wenn sich der Roboter 24 bewegt, darf sich in seinem Bewegungsradius kein unzulässiges Objekt und insbesondere kein Körperteil von Bedienpersonal befinden. Deshalb ist um den Roboterarm 24 ein virtuelles Schutzfeld 26 gelegt, und die Steuerung 22 wertet die Bilddaten in diesem virtuellen Schutzfeld 26 aus, um unzulässige Objekteingriffe zu erkennen. Zur Konfiguration dieses Schutzfelds 26 ist die Steuerung 22 mit einer Konfigurationseinrichtung 21 verbunden, deren Funktionsweise weiter unten erläutert wird. Konfigurationseinrichtung 21 und Steuerung 22 sind jeweils mit einer Datenschnittstelle 23 verbunden, um Daten nach extern zu senden und von extern zu empfangen.

Da die Erzeugung von dreidimensionalen Bilddaten mit den heute zur Verfügung stehenden Algorithmen nicht gänzlich fehlerfrei sein kann, liegt das Schutzfeld 26 in einem Teil des Raumbereichs 14, in dem sich keinerlei Objekte befinden. Dadurch fällt es der Auswertungseinheit 22 leichter, einen unzulässigen Objekteingriff zu erkennen, weil jegliche Veränderung des Sichtfelds, die nicht Bildaufnahmetoleranzen oder dergleichen geschuldet ist, unzulässig ist. Die Erfindung umfasst jedoch auch solche Ausführungsformen, bei denen vorab erlaubte Objekteingriffe in das Schutzfeld 26 eingelernt werden und nur eine Abweichung von diesen erlaubten Objekteingriffen als unzulässiger Objekteingriff erkannt wird.

Erkennt die Steuerung 22 einen unzulässigen Eingriff in das Schutzfeld 26, so wird über eine Warn- oder Abschalteinrichtung 28 eine Warnung ausgegeben oder die Gefahrenquelle abgesichert, in dem dargestellten Beispiel also der Roboterarm 24 gestoppt. Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird.

Für Anwendungen in der Sicherheitstechnik ist der Sicherheitssensor 10 fehlersicher ausgelegt. Dies bedeutet unter anderem, dass der Sicherheitssensor 10 sich selber in Zyklen unterhalb der geforderten Ansprechzeit testen kann und dass der Ausgang zur sowie die Warn- und Abschalteinrichtung 28 selbst sicher, beispielsweise zweikanalig ausgelegt ist. Ebenso ist auch die Steuerung 22 selbstsicher, wertet also zweikanalig aus oder verwendet Algorithmen, die sich selbst prüfen können.

Anstelle des dargestellten stereoskopischen Verfahrens umfasst die Erfindung auch weitere dreidimensionale Bildsensoren, etwa eine Laufzeitkamera, die Lichtpulse oder moduliertes Licht aussendet und aus der Lichtlaufzeit auf Entfernungen schließt, oder aktiv triangulierende Kameras, welche Verzerrungen in der Struktur des Beleuchtungsmusters oder die Lage von Teilen des Beleuchtungsmusters im aufgenommenen Bild zur Berechnung von Entfernungsdaten ausnutzen. Schließlich ist alternativ zu einer dreidimensionalen Kamera auch der Einsatz eines Laserscanners denkbar.

Eine weitere Möglichkeit, einen entfernungsauflösenden Lichtempfänger umzusetzen, stellt ein tastendes Lichtgitter dar. Ein solches Lichtgitter besteht aus mehreren zu einer Reihe angeordneten Lichttastern, die einen entfernungsmessenden Lichtempfänger aufweisen, der auf einem Lichtlaufzeitverfahren oder einer Triangulation mittels eines Matrix- oder Zeilenempfängers oder einer ortsauflösenden Diode (PSD, position sensing device) basiert. Ein oder mehrere derartige triangulationsbasierte tastende Lichtgitter bilden also eine Approximation an einen dreidimensionalen Bildsensor, die von der Erfindung mit umfasst ist.

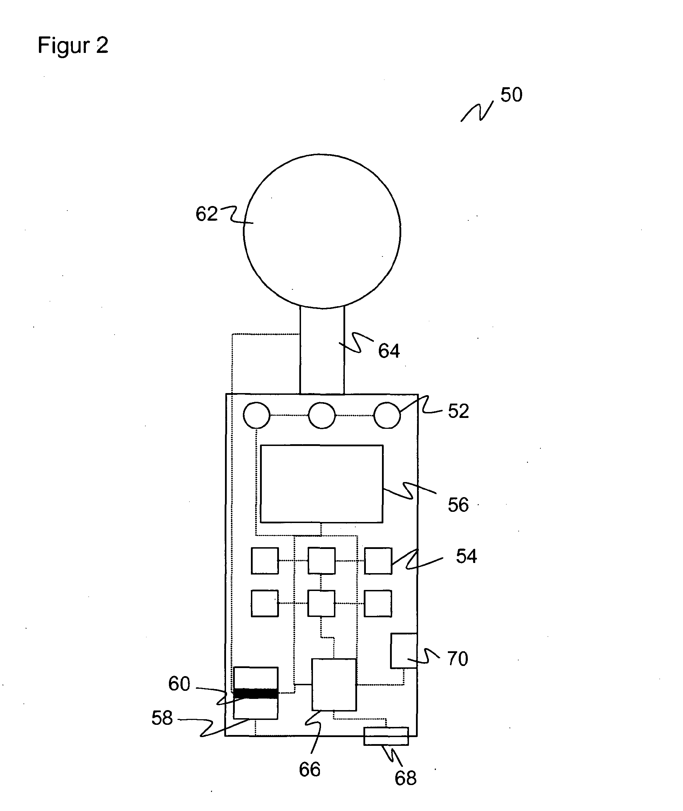

Figur 2 zeigt schematisch eine Ausführungsform einer erfindungsgemäßen mobilen Vorrichtung 50 zur Konfiguration von Teilbereichen, insbesondere Schutzfeldern 26. Die mobile Vorrichtung oder das Handgerät 50 kann auf einem Funkgerät, einem Handy, einem Notebook, einem PDA oder dergleichen basieren. Das Handgerät weist Bedienelemente 52, 54 auf, damit ein Benutzer in einer üblichen Weise das Konfigurationsprogramm aufrufen und steuern kann. Dabei werden Auswahlmöglichkeiten, wie eine Menüführung, Ergebnisse und sonstige Erläuterungen auf einer Anzeige 56 dargestellt.

Das Handgerät 50 weist eine Positionsbestimmungseinrichtung 58 mit einem zugehörigen Auslöseknopf 60 auf. Die Bedienelemente 52, 54, die Anzeige 56 sowie die Positionsbestimmungseinrichtung 58 sind mit einer Steuerung 66 des Handgeräts verbunden. Eine Identifikationseinrichtung 70, etwa ein Fingerabdrucksensor, ist mit der Steuerung 66 verbunden.

Durch wiederholtes oder einmaliges Bedienen des Auslöseknopfes 60 kann das Handgerät 50 angewiesen werden, seine aktuelle zweidimensionale oder dreidimensionale Position in dem Raumbereich 14 zu bestimmen. Dazu ist die Positionsbestimmungseinrichtung 58 in einer Ausführungsform mit elektromagnetischen Empfängern ausgestattet, welche in der Lage sind, mindestens ein externes Peilsignal aufzunehmen und daraus die Position zu berechnen. Sehr bekannte Ausführungsformen hierzu stellen das jeweils satellitengestützte Global Positioning System (GPS) und das zukünftige Galileo-System dar. Denkbar ist aber auch, dass der Sensor 10 entsprechende lokale terrestrische Sender aufweist.

Alternativ zu einer Positionsbestimmung durch das Handgerät 50 selbst kann die Positionsbestimmungseinrichtung 58 den Sensor 10 auffordern, die Position zu ermitteln. Dies kann optisch, etwa durch Bildauswertungen und Triangulation geschehen, oder auf andere Weise, wie durch eine Lichtlaufzeitbestimmung vom Sensor 10 zum Handgerät 50 und zurück. Damit Sensor 10 und Handgerät 50 hierfür und für weitere Zwecke Daten austauschen können, sind beide jeweils mit einer Datenschnittstelle 23, 68 ausgerüstet, die drahtlos oder drahtgebunden miteinander kommunizieren. Die Datenschnittstelle 68 des Handgeräts 50 ist mit der Handgerätsteuerung 66 verbunden.

Sind Positionsdaten zu einer oder mehreren auf diese Weise von der Positionsbestimmungseinrichtung 58 ermittelten Positionen vorhanden, so kann über eines der Bedienelemente 52, 54 das Handgerät 50 angewiesen werden, diese Positionen zur Definition eines Teilbereiches oder einer Grenzlinie beziehungsweise einer Grenzfläche eines Teilbereichs zusammenzusetzen. Auf diese Weise wird aus ausgewählten und nacheinander eingenommenen Positionen des Handgeräts 50 ein Teilbereich festgelegt und somit konfiguriert.

An dem Handgerät 50 ist eine Referenzkugel 62 vorgesehen, welche beispielsweise über einen Stift 64 mit dem Handgerät 50 verbunden ist. Referenzkugel 62 und/oder Stift 64 können gleichzeitig als Antenne für den Empfang eines Peilsignals oder für die Kommunikation der Datenschnittstelle 68 verwendet werden. Die Referenzkugel 62 kann abgenommen und gegen einen anderen Referenzkörper mit einer anderen Geometrie oder anderen Ausmaßen ausgetauscht werden. Eine Positionsbestimmung durch die Positionsbestimmungseinrichtung 58 kann sich statt auf das Handgerät 50 auch auf die optisch genau definierbare Referenzkugel 62 beziehen, so dass eigentlich diese Referenzkugel 62 geortet wird.

Da die Referenzkugel 62 eine wohldefinierte Form und Größe hat, kann hierdurch gleichzeitig bestimmt werden, ob das Auflösungsvermögen des Sensors 10 an der für die Konfiguration eines Teilbereiches gewünschten Position ausreichend ist, was der Fall ist, wenn die Referenzkugel 62 erkannt wird.

Ist das Handgerät 50 nicht in Benutzung, so kann es in einer Dockingstation des Sensors 10 gelagert werden, wo seine Akkumulatoren aufgeladen werden und wo ein Software- oder Firmwareupdate seiner Steuerung 66 oder eine Synchronisation von Daten vorgenommen werden kann. Das Handgerät 50 kann auch als Bedienerschnittstelle im Normalbetrieb verwendet werden, also nach Abschluss der Konfiguration. Weiter kann die Anzeige 56 des Handgeräts 50 auch dazu dienen, den Zustand des Sicherheits- oder Überwachungssystems zu visualisieren, beispielsweise Ein/Aus.

Es ist denkbar, das Schutzfeld 26 in der Systemsteuerung 22 oder der Handgerätsteuerung 66 aus Informationen über die Gefahrenquelle zu berechnen, hier also über den Roboterarm 24. Dabei ist die Grundidee, Informationen über den Roboterarm 24 einzugeben oder einzulernen und daraus automatisch die erforderlichen Schutzfeldgrenzen 26 zu ermitteln. Dies wird besonders dann vorteilhaft, wenn das Schutzfeld anders als das Schutzfeld 26 in Figur 1 kompliziert und/oder dynamisch wird.

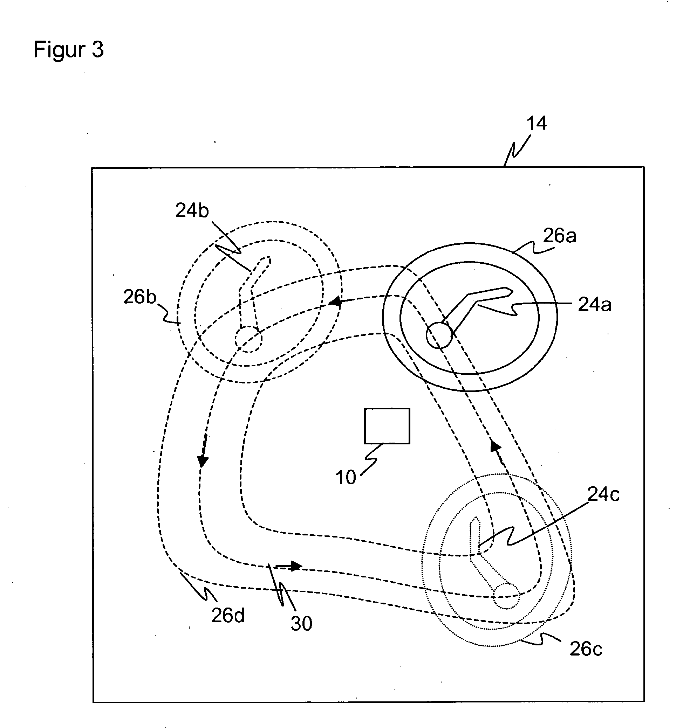

Eine solche dynamische Schutzfeldkonfiguration ist in Figur 3 in der Draufsicht des dort nur noch als Kästchen angedeuteten Sicherheitssensors 10 und des von ihm überwachten Raumbereichs 14 dargestellt. Der Roboterarm 24 bewegt sich entlang einer Bewegungsbahn 30 durch den Raumbereich 14. Durch die die Bewegungsbahn 30 umgebenden Linien ist ein Schutzfeld 26d vorgegeben, welches diesen Bewegungsbereich des Roboterarms 24 umgibt. Mit durchgezogenen Linien ist die Position des Roboterarms 24a mit einem Schutzfeld 26a zu einem ersten Zeitpunkt, mit strichpunktierten Linien die Position des Roboterarms 24b mit einem Schutzfeld 26b zu einem zweiten Zeitpunkt und mit gepunkteten Linien die Position des Roboterarms 24c mit einem Schutzfeld 26c zu einem dritten Zeitpunkt dargestellt.

Dies entspricht also einem Arbeitsgang, bei dem der Roboter sich von einer ersten auf eine zweite und dann auf eine dritte Position begibt und dort jeweils eine Bewegung ausführt. Die benötigte Schutzfeldkonfiguration wird dabei jeweils umgeschaltet oder dynamisch mitgezogen, damit sie tatsächlich die Gefahrenquelle umgibt und nicht unnötig Bereiche schützt, in denen der Roboter zu diesem Zeitpunkt gar nicht ist. Ein oder mehrere virtuelle Schutzfelder 26 umgeben also statisch oder dynamisch eine Gefahrenquelle und sichern diese damit gegen unzulässige Eingriffe ab.

Dabei ist es erfindungsgemäß sowohl möglich, mit der mobilen Vorrichtung 50 die Bewegungsbahn 30 des Roboters abzulaufen und jeweils kontinuierlich oder an Eckpunkten eine Positionsbestimmung durchführen zu lassen, als auch das Handgerät an einem Roboter zu befestigen und eine Positionsbestimmung vorzunehmen, während der Roboter seinen Arbeitzyklus einmal vollständig oder teilweise ausführt.

Über die Bedienelemente 52, 54 des Handgeräts 50 können auch verschiedene Typen von Teilbereichen selektiert werden. Somit ist eine Unterscheidung von Schutzbereichen, Warnbereichen, Mutingbereichen oder Blankingbereichen möglich. Jedes dieser Elemente kann auch mehrfach auftreten. Es ist auch möglich, über das Handgerät 50 einen bereits definierten Teilbereich wieder zu löschen.

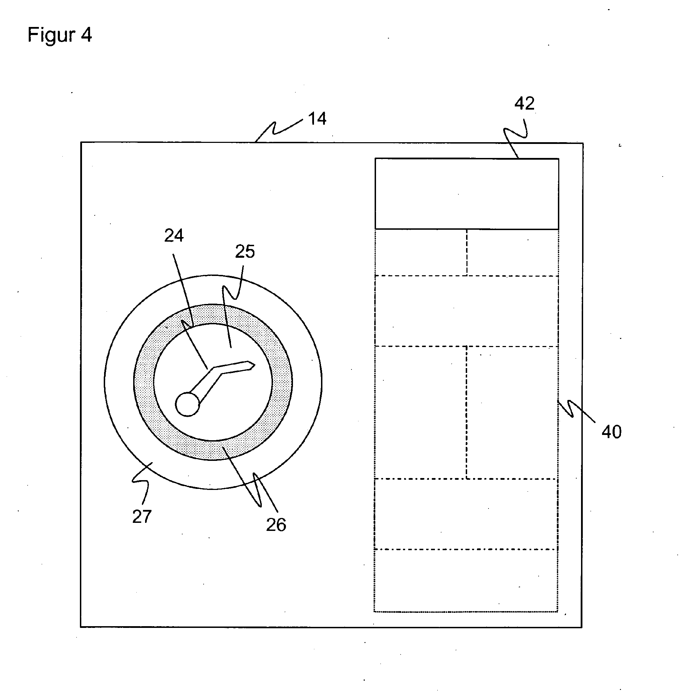

Figur 4 zeigt in der Draufsicht eine Konfiguration mit unterschiedlichen Typen von Teilbereichen. Um den Roboterarm 24 befindet sich ein Bereich 25, der nicht auf Bewegungen überwacht wird, weil sich dort der Roboterarm 24 bewegt. Dieser Bereich 25 wird entweder nicht vorkonfiguriert, weil er implizit durch den umgebenden Schutzbereich 26 definiert ist, oder man könnte ihn auch als Blankingbereich bezeichnen. Konzentrisch zu dem Schutzbereich 26 befindet sich ein Warnbereich 27. Die genannten Teilbereiche 25, 26, 27 sind bei einem zweidimensionalen Sensor 10 zylinderförmig, bei einem dreidimensionalen Sensor 10 kreisförmig.

Neben dem Roboterarm 24 befindet sich beispielhaft noch ein Förderweg 40. Dabei soll zu bestimmten Zeitpunkten das Durchfahren eines Objekts, also eines Gabelstaplers, einer Palette oder dergleichen, zulässig sein. Deshalb ist ein Blankingbereich 42 definiert, der innerhalb des den Förderweg 40 vollständig überlagernden Schutzbereichs eine sich durch gestrichelte und strichpunktierte Linien angedeutete bewegliche Zone definiert, innerhalb derer zu den festgelegten Zeiten einer erlaubten Durchfahrt keine Sicherheitsfunktion ausgelöst wird.

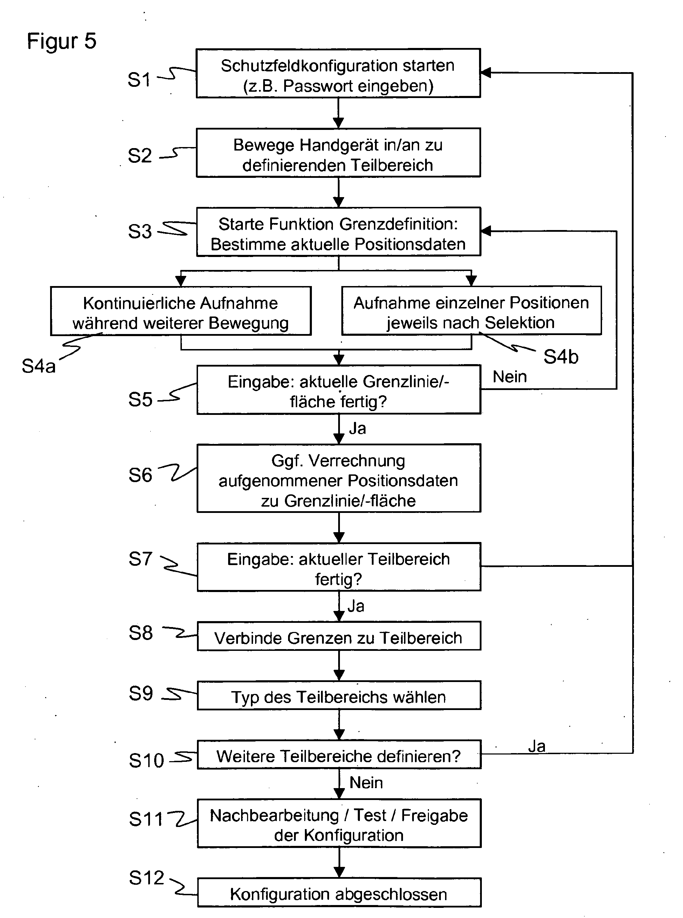

Das Konfigurationsverfahren mit dem Sensor 10 und dem Handgerät 50 wird nun anhand der Figur 5 zusammenfassend erläutert. Die Konfiguration wird in einem ersten Schritt S1 gestartet, bei der die Bedienperson sich authentifizieren muss. Dies kann beispielsweise durch ein getipptes oder gesprochenes Passwort oder durch ein biometrisches Signal wie einen Fingerabdruck geschehen.

Anschließend bewegt sich die Bedienperson in einem Schritt S2 in die Nähe des ersten zu definierenden Teilbereichs und weist das Handgerät 50 in einem Schritt S3 durch Betätigen des Auslöseknopfs 60 an, seine aktuelle Position zu bestimmen und diese für die spätere Definitionen einer Grenzlinie oder Grenzfläche des Teilbereiches abzuspeichern. Durch weitere Bewegung des Handgeräts 50 entlang der gewünschten Grenze werden weitere Positionsdaten gewonnen. Diese Positionsdaten können wahlweise in einem Schritt S4a kontinuierlich während der weiteren Bewegung oder in einem Schritt S4b jeweils an einzelnen diskreten Positionen gewonnen werden.

Ist auf diese Weise eine Grenzlinie vervollständigt, so gibt der Benutzer in einem Schritt S5 eine entsprechende Anweisung über die Bedienelemente 52, 54. Die aufgenommenen Positionen werden entweder direkt als Grenze verwendet, oder sie werden zuvor in einem Schritt S6 verrechnet, beispielsweise indem eine geglättete Verbindungslinie gebildet wird.

Der Benutzer wird dann in einem Schritt S7 gefragt, ob der aktuelle Teilbereich durch die bisher eingegebenen Grenzen schon festgelegt ist und, wenn das nicht der Fall ist, zur Eingabe weiterer Positionen in Wiederholung der Schritte S1-S6 aufgefordert. Andernfalls werden die aufgenommenen Grenzen in einem Schritt S8 zu einem Teilbereich verbunden. Dies kann durch einfaches Aneinanderfügen der definierten Grenzen erfolgen, alternativ aber auch durch ein komplizierteres Vorgehen, etwa das Bilden der konvexen Hülle, oder die Auswahl eines einfachen geometrischen Körpers oder einer einfachen geometrischen Form von vorgegebener oder minimaler Größe, welche alle Grenzen enthält.

In einem Schritt S9 legt der Benutzer den Typ des soeben definierten Teilbereichs fest, also ob es ein Schutzbereich, ein Warnbereich, ein Mutingbereich, ein Blankingbereich oder ein anderer denkbarer Typ von Bereich ist. In einem Schritt S10 kann der Benutzer den Zyklus der Schritte S1-S9 zur Definition weiterer Teilbereiche erneut durchlaufen.

Möchte er dies nicht, so ist die Konfiguration zunächst abgeschlossen. Sie kann aber in einem Schritt S11 noch in dem Handgerät 50, in dem Sensor 10 oder in einem externen Rechner nachbearbeitet oder korrigiert werden. Dabei können Teilbereiche verschoben, Grenzen geglättet, Teilbereiche kopiert und hinzugefügt oder beliebige andere Manipulationen vorgenommen werden. Bevor der Sensor die somit eingegebene Konfiguration verwendet, wird sie getestet, indem aus den verschiedensten denkbaren Richtungen mit verschiedenen Testkörpern die Teilbereiche stimuliert und die Reaktionen des Sensors 10 überprüft werden. Alternativ kann dieser Test auch schon jeweils nach Schritt S9 mittels des Handgeräts 50 selbst vorgenommen werden, das sich zu diesem Zeitpunkt ohnehin in der Nähe dieses Teilbereichs befindet. Sind die Tests abgeschlossen, so kann die Konfiguration für den Betrieb freigegeben werden, gegebenenfalls nach erneuter Authentifizierung desjenigen, der die Freigabe erteilt. Damit ist der Sensor 10 im Schritt S12 fertig konfiguriert, und die Konfiguration wird im Sicherheitssystem oder dem Sensor 10 gespeichert.

Alternativ zu der Aufnahme von diskreten Positionen oder Linienstücken für die Definition der Teilbereiche ist auch ein anderes Vorgehen denkbar. Dabei können etwa bestimmte geometrische Formen ausgewählt werden, die nicht über die Außenkontur, sondern durch charakterisierende Werte eingegeben werden. Für einen Kreis oder eine Kugel könnte dies der Mittelpunkt und ein Radius sein. Eine weitere nicht abschließende Aufzählung solcher geometrischer Formen umfasst Rechtecke, Quader, Ellipsen und Ellipsoide sowie Korridore bestimmter Ausdehnung um eine konfigurierte Linie aus Positionsdaten. Einige Möglichkeiten lassen sich am kompaktesten durch die Analogie eines Mauszeigers und des Mausknopfes in einem gängigen Mal- oder CAD-Programm erläutern, wobei der Mauszeiger dem Handgerät 50 und der Mausknopf dem Auslöseknopf 60 entspricht. Ähnliche Funktionen für Grundkörper, frei zeichnen, Stiftdicken und dergleichen, wie sie in solchen Programmen zur Verfügung stehen, können auch bei der Konfiguration von Teilbereichen verwendet werden.

Das Ergebnis der fertigen Konfiguration, aber auch von Teilfortschritten während der Konfiguration, kann auf einer Anzeige des Handgeräts 50, des Sensors 10 oder einer angeschlossenen Datenbrille visualisiert werden. Dabei können die Teilbereiche in verschiedenen Farben und verschiedenen Durchsichtigkeitsstufen in das reale Bild eingeblendet werden, wobei dieses reale Bild aus den dreidimensionalen Bilddaten auch in einer veränderten Perspektive erzeugt werden kann. Alternativ ist die Datenbrille zumindest teilweise transparent, und dem wirklichen unmittelbaren Bild werden die Teilbereiche überblendet.

Das Handgerät 50 ermöglicht somit eine intuitive und einfache Konfiguration von Feldern oder Volumina im realen Raum unmittelbar an der Maschine oder Anlage. Diese Konfigurationsart ist deshalb wesentlich intuitiver als die bekannten Verfahren, weil die Bedienperson die Konfiguration unmittelbar am Ort durchführt und nicht durch Modelle oder unterschiedliche Darstellungsperspektiven verwirrt wird. Gleichzeitig lassen sich nur Positionen konfigurieren, welche für den Sensor 10 auch sichtbar sind. Damit erfolgt eine reale implizite Kontrolle der konfigurierten Parameter.

## Patentansprüche

1. Optoelektronischer Sensor (10) zur Überwachung eines Raumbereichs (14),
der eine Sensordatenschnittstelle (23), eine Sensorsteuerung (22) und einen Lichtempfänger (12, 12') aufweist, wobei die Sensorsteuerung (22) dafür ausgebildet ist, aus Empfangssignalen des Lichtempfängers (12, 12') Eingriffe in den Raumbereich (14) zu erkennen und die Eingriffe Teilbereichen des Raumbereichs (14) zuzuordnen, und wobei der Sensor (10) eine Konfigurationseinrichtung (21) aufweist, um Grenzpunkte, Grenzlinien oder Grenzflächen der Teilbereiche festzulegen,
**dadurch gekennzeichnet,**
**dass** die Konfigurationseinrichtung (21) dafür ausgebildet ist, über die Sensordatenschnittstelle (23) Positionsdaten von einem Handgerät (50) in dem Raumbereich (14) zu empfangen oder eine Anweisung zu erhalten, Positionsdaten der aktuellen Position des Handgeräts (50) in dem Raumbereich (14) zu bestimmen, und dass die Konfigurationseinrichtung (21) weiterhin dafür ausgebildet ist, aufgrund der Positionsdaten einen Grenzpunkt, eine Grenzlinie oder eine Grenzfläche eines Teilbereichs festzulegen, wobei sich nur Positionen konfigurieren lassen, für die ein Referenzziel (62) an dem Handgerät, nämlich das Handgerät (50), während der Konfiguration für den Sensor (10) sichtbar ist.

2. Sensor (10) nach Anspruch 1,
wobei eine Warn- und Absicherungseinrichtung (28) vorgesehen ist, welche auf Detektion der Sensorsteuerung (22) eines unzulässigen Eingriffs in einen Teilbereich eine Warnung ausgeben oder die Gefahrenquelle (24) absichern kann, und wobei die Sensorsteuerung (22) und die Konfigurationseinrichtung (21) dafür ausgebildet sind, Teilbereiche als Schutzbereiche, Wambereiche, Mutingbereiche oder Blankingbereiche festzulegen.

3. Sensor (10) nach Anspruch 1 oder 2,
wobei der Sensor (10) einen pixelaufgelösten zeilen- oder matrixförmigen Bildsensor aufweist, insbesondere ein visueller 3D-Sensor nach dem Prinzip der Stereoskopie, der aktiven Triangulation oder der Lichtlaufzeit ist, oder wobei der Sensor (10) ein Laserscanner ist.

4. Sensor (10) nach einem der vorherigen Ansprüche,
wobei der Sensor (10) eine Auflösungstesteinrichtung (22) aufweist, die dafür ausgebildet ist, zu überprüfen, ob ein Referenzziel (62) an dem Handgerät (50) noch optisch aufgelöst werden kann und wobei die Auflösungstesteinrichtung (22) weiterhin dafür ausgebildet ist, unmittelbar per optischem oder akustischem Signal oder über die Sensordatenschnittstelle (23) an das Handgerät (50) eine Warnung auszugeben, wenn das Referenzziel (62) nicht aufgelöst werden kann, insbesondere in einem festzulegenden Teilbereich.

5. Mobile Vorrichtung (50), insbesondere Handgerät, zur Konfiguration von Teilbereichen des Sichtbereichs (14) eines optoelektronischen Sensors (10), die eine Handgerätdatenschnittstelle (68) für den Datenaustausch mit dem Sensor (10) und eine Handgerätsteuerung (66) aufweist, wobei die Vorrichtung eine Positionsbestimmungseinrichtung (58) aufweist, die dafür ausgebildet ist, Positionsdaten der jeweiligen aktuellen Position der Vorrichtung (50) im Raum zu bestimmen oder mittels Daten- und Befehlsaustauschs von dem Sensor (10) bestimmen zu lassen,
**gekennzeichnet durch**
eine Positionsdaten-Auswahleinrichtung (52, 54, 60), welche dafür ausgebildet ist, mindestens eine Position aus den Positionsdaten auszuwählen und diese an die Handgerätsteuerung (66) zu übermitteln, wobei die Handgerätsteuerung (66) dafür ausgebildet ist, aufgrund der mindestens einen Position einen Grenzpunkt, eine Grenzlinie oder eine Grenzfläche eines Teilbereichs festzulegen wobei die Vorrichtung (50) ein Referenzziel (62) aufweist, dessen Ausdehnung einem gewünschten Auflösungsvermögen des Sensors (10) entspricht und deren Größe einer gewünschten Sicherheitsstufe entspricht, insbesondere Körperschutz, Armschutz oder Fingerschutz, wobei sich nur Positionen konfigurieren lassen, für die das Referenzziel (62), nämlich das Handgerät (50), während der Konfiguration für den Sensor (10) sichtbar ist.

6. Mobile Vorrichtung (50) nach Anspruch 5,
wobei die Positionsbestimmungseinrichtung (58) dafür ausgebildet ist, Positionsdaten jeweils auf eine Benutzereingabe oder ein Signal des Sensors (10) hin zu bestimmen, und/oder wobei die Positionsbestimmungseinrichtung (58) die aktuelle Position jeweils für einen Punkt oder kontinuierlich entlang Abschnitten der Bewegungsbahn der Vorrichtung (50) bestimmen kann,
und wobei die Handgerätsteuerung (66) dafür ausgebildet ist, eine Grenzlinie oder eine Grenzfläche eines Teilbereichs entlang der Verbindung zwischen den Punkten, entlang der Abschnitte der Bewegungsbahn selbst, als deren jeweilige konvexe Hülle oder als kleinste einfache geometrische Form festzulegen, insbesondere Kreis, Kugel, Rechteck, Quader oder Zylinder, die eine Anzahl von Punkten oder einen Abschnitt der Bewegungsbahn umfasst.

7. Mobile Vorrichtung (50) nach Anspruch 5 oder 6,
wobei die Positionsbestimmungseinrichtung (58) einen elektromagnetischen Empfänger (58, 64, 62) aufweist, um die aktuelle Position der Vorrichtung mittels externer elektromagnetischer Signale zu bestimmen, und/oder wobei die Positionsbestimmungseinrichtung (58) mit der Handgerätdatenschnittstelle (68) verbunden ist, um die aktuelle Position der Vorrichtung (50) von dem Sensor (10) zu empfangen.

8. Mobile Vorrichtung (50) nach einem der Ansprüche 5 bis 7, wobei das Referenzziel (62)
eine Kugel mit einem vorgegebenen Radius ist, und wobei das Referenzziel (62) austauschbar an der Vorrichtung (50) angebracht ist.

9. Mobile Vorrichtung (50) nach einem der Ansprüche 5 bis 8,
wobei die Vorrichtung (50) eine Auswahleinrichtung (52, 54) aufweist, welche die Auswahl einer geometrischen Form für einen Teilbereich ermöglicht, insbesondere eines Kreises, einer Kugel, eines Rechtecks, eines Quaders oder eines Zylinders, um einen Teilbereich mit der geometrischen Form an der aktuellen Position festzulegen, und/oder welche die Auswahl eines Typs eines Teilbereichs ermöglicht, insbesondere eines Schutzbereichs, eines Warnbereichs, eines Mutingbereichs oder eines Blankingbereichs.

10. Mobile Vorrichtung (50) nach einem der Ansprüche 5 bis 9,
wobei die Vorrichtung (50) eine Identifikationseinrichtung (70) aufweist, welche dafür ausgebildet ist, die Funktionalität der Vorrichtung (50) zumindest teilweise nur nach Authentifizierung freizugeben, insbesondere durch ein Passwort, ein akustisches Signal oder ein biometrisches Signal.

11. Mobile Vorrichtung (50) nach einem der Ansprüche 5 bis 10,
wobei die Vorrichtung (50) eine Anzeige (56) aufweist, insbesondere einen Anschluss für eine Datenbrille, um bereits definierte oder aktuell zu definierende Teilbereiche anzuzeigen und/oder um Bedien- oder Auswahlmöglichkeiten anzuzeigen.

12. Sicherheitssystem (10, 50) mit einem Sensor (10) nach einem der Ansprüche 1 bis 4 und einer mobilen Vorrichtung (50) nach einem der Ansprüche 5 bis 11.

13. Sicherheitssystem (10, 50) nach Anspruch 12,
wobei das System (10, 50) elektromagnetische Sender aufweist, deren Signal die Positionsbestimmungseinrichtung (58) auswerten kann, um die aktuelle Position der mobilen Vorrichtung (50) zu bestimmen.

14. Sicherheitssystem (10, 50) nach Anspruch 12 oder 13,
wobei die Sensordatenschnittstelle (23) und die Handgerätdatenschnittstelle (68) drahtgebunden, insbesondere Ethernetschnittstellen, oder drahtlose Schnittstellen sind, insbesondere Bluetooth-, WLAN-, oder Mobilfunkschnittstellen sind, und/oder wobei das System (10, 50) eine Dockingstation für die mobile Vorrichtung (50) aufweist, um eine Stromversorgung aufzuladen oder Software zu synchronisieren und/oder wobei die Handgerätsteuerung (66) dafür ausgebildet ist, dass die Vorrichtung (50) als Bedienerschnittstelle für den Sensor (10) während des Betriebs auch nach Abschluss der Konfiguration dienen kann.

15. Sicherheitssystem (10, 50) nach einem der Ansprüche 12 bis 14,
wobei eine Anzeige (56) vorgesehen ist, insbesondere eine Datenbrille, um festgelegte oder mögliche festzulegende Teilbereiche anzuzeigen, insbesondere überblendet mit einer unmittelbaren Ansicht des Raumbereichs (14) durch transparente Bereiche der Datenbrille oder mit einer elektronischen Darstellung des Raumbereichs (14) aus einer wählbaren Perspektive.

16. Verfahren zur Konfiguration von Teilbereichen eines Raumbereichs (14) für die Überwachung auf Objekteingriffe und die Zuordnung eines Objekteingriffs zu einem Teilbereich mittels eines optoelektronischen Sensors (10), wobei Grenzpunkte, Grenzlinien oder Grenzflächen der Teilbereiche konfiguriert werden, **dadurch gekennzeichnet,**
**dass** eine mobile Vorrichtung (50), die über eine Datenschnittstelle (23, 68) mit dem Sensor (10) verbunden ist, in dem Raumbereich (14) nacheinander an Positionen gebracht wird, die für die Festlegung eines Teilbereiches relevant sind, dass die mobile Vorrichtung (50) und/oder der Sensor (10) jeweils auf eine Bedienereingabe hin Positionsdaten der aktuellen Position der mobilen Vorrichtung (50) bestimmt,
und **dass** der Sensor (10) und/oder die mobile Vorrichtung (50) jeweils aufgrund einer Auswahl der Positionsdaten einen Grenzpunkt, eine Grenzlinie oder eine Grenzfläche eines Teilbereichs festlegt, wobei sich nur Positionen konfigurieren lassen, für die ein Referenzziel (62) an dem Handgerät, nämlich das Handgerät (50), während der Konfiguration für den Sensor (10) sichtbar ist.

17. Verfahren nach Anspruch 16,
wobei die Teilbereiche als Schutzbereiche, Warnbereiche, Mutingbereiche oder Blankingbereiche festgelegt werden können, und wobei auf Detektion eines unzulässigen Eingriffs
- in einen Schutzbereich eine Gefahrenquelle abgesichert wird,
- in einen Warnbereich eine Warnung ausgegeben wird,
- in einen Mutingbereich eine Sicherheitsfunktion zumindest vorübergehend überbrückt wird und
- in einen Blankingbereich innerhalb eines Schutzbereichs keine Absicherung erfolgt.

18. Verfahren nach Anspruch 16 oder 17,
wobei die konfigurierten Teilbereiche getestet werden, indem Eingriffe in die Teilbereiche vorgenommen werden und die Reaktion des Sensors (10) überprüft wird, und wobei das Testobjekt insbesondere die mobile Vorrichtung (50) ist.

19. Verfahren nach einem der Ansprüche 16 bis 18,
wobei die konfigurierten Teilbereiche nach der Konfiguration in der mobilen Vorrichtung (50), in einem unabhängigen Rechner und/oder in dem Sensor (10) nachbearbeitet, korrigiert und/oder freigegeben werden.

20. Verfahren nach einem der Ansprüche 16 bis 19,
wobei die mobile Vorrichtung (50) bei der Konfiguration durch Bedienpersonal bewegt oder an einem Fahrzeug, einem Roboter (24) oder einem Maschinenteil befestigt wird.

## Claims

1. An optoelectronic sensor (10) for monitoring a spatial zone (14) which has a sensor data interface (23), a sensor control (22) and a light receiver (12, 12'), wherein the sensor control (22) is configured to recognise intrusions into the spatial zone (14) from received signals of the light receiver (12, 12') and to associate the intrusions with part zones of the spatial zone (14), and wherein the sensor (10) has a configuration device (21) to define boundary points, boundary lines or boundary surfaces of the part zones,
**characterised in that**
the configuration device (21) is configured to receive positional data from a handheld device (50) in the spatial zone (14) via the sensor data interface (23) or to receive an instruction to determine positional data of the current position of the handheld device (50) in the spatial zone; and **in that** the configuration device (21) is furthermore configured to define a boundary point, a boundary line or a boundary surface of a part zone on the basis of the positional data, wherein only positions can be configured for which a reference target (62) at the handheld device, namely the handheld device (50), is visible for the sensor (10) during the configuration.

2. A sensor (10) in accordance with claim 1,
wherein a warning and securing device (28) is provided which, on detection by the sensor control (22) of an unpermitted intrusion into a part zone, can output a warning or can secure the danger source (24), and wherein the sensor control (22) and the configuration device (21) are configured to define part zones as protected zones, warning zones, muting zones or blanking zones.

3. A sensor (10) in accordance with claim 1 or claim 2,
wherein the sensor (10) has a pixel-resolved image sensor of an array or matrix type, in particular a visual 3D sensor in accordance with the principle of stereoscopy, of active triangulation or of the time of flight of light, or wherein the sensor (10) is a laser scanner.

4. A sensor (10) in accordance with any one of the preceding claims, wherein the sensor (10) has a resolution testing device (22) which is configured to check whether a reference target (62) at the handheld device (50) can still be optically resolved, and wherein the resolution testing device (22) is furthermore configured to output a warning to the handheld device (50) directly by an optical or acoustic signal or via the sensor data interface (23) when the reference target (62) cannot be resolved, in particular in a part zone to be defined.

5. A mobile apparatus (50), in particular a handheld device, for configuring part zones of the viewing range (14) of an optoelectronic sensor (10) which has a handheld data interface (68) for data exchange with the sensor (10) and has a handheld control (66), wherein the apparatus has a position determining device (58) which is configured to determine positional data of the respective current position of the apparatus (50) in the space or to have them determined by the sensor (10) by means of an exchange of data and commands,
**characterised by**
a positional data selection device (52, 54, 60) which is configured to select at least one position from the positional data and to transfer it to the handheld device control (66), wherein the handheld device control (66) is configured to define a boundary point, a boundary line or a boundary surface of a part zone on the basis of the at least one position, wherein the apparatus (50) has a reference target (62) whose extent corresponds to a desired resolution capacity of the sensor (10) and whose size corresponds to a desired safety stage, in particular body protection, arm protection or finger protection, wherein only positions can be configured for which the reference target (62), namely the handheld device (50), is visible for the sensor (10) during the configuration.

6. A mobile apparatus (50) in accordance with claim 5,
wherein the positional determination device (58) is configured to determine positional data in each case in response to a user input or to a signal of the sensor (10) and/or wherein the position determination device (58) can determine the current position in each case for a point or continuously along sections of the movement track of the apparatus (50),
and wherein the handheld device control (66) is configured to define a boundary line or a boundary surface of a part zone along the connection between the points, along the sections of the movement track itself, as its respective convex envelope or as a very small simple geometrical shape, in particular a circle, a sphere, a rectangle, a parallelepiped or a cylinder, which includes a number of points or a section of the movement track.

7. A mobile apparatus (50) in accordance with claim 5 or claim 6, wherein the position determination device (58) has an electromagnetic receiver (58, 64, 62) to determine the current position of the apparatus by means of external electromagnetic signals, and/or wherein the position determination device (58) is connected to the handheld device data interface (68) to receive the current position of the apparatus (50) from the sensor (10).

8. A mobile apparatus (50) in accordance with any one of the claims 5 to 7,
wherein the reference target (62) is a sphere with a predefined radius and wherein the reference target (62) is replaceably attached to the apparatus (50).

9. A mobile apparatus (50) in accordance with any one of the claims 5 to 8,
wherein the apparatus (50) has a selection device (52, 54) which enables the selection of a geometric shape for a part zone, in particular of a circle, of a sphere, of a rectangle, of a parallelepiped or of a cylinder, to define a part zone having the geometric shape at the current position, and/or which enables the selection of a type of a part zone, in particular of a protected zone, of a warning zone, of a muting zone or of a blanking zone.

10. A mobile apparatus (50) in accordance with any one of the claims 5 to 9,
wherein the apparatus (50) has an identification device (70) which is configured to release the functionality of the apparatus (50) at least in part only after authentication, in particular by a password, an acoustic signal or a biometric signal.

11. A mobile apparatus (50) in accordance with any one of the claims 5 to 10,
wherein the apparatus (50) has a display (56) in particular a connection for data spectacles, to display part zones already defined or currently to be defined and/or to display operating or selection options

12. A safety system (10, 50) having a sensor (10) in accordance with any one of the claims 1 to 4 and having a mobile apparatus (50) in accordance with any one of the claims 5 to 11.

13. A safety system (10, 50) in accordance with claim 12,
wherein the system (10, 50) has electromagnetic transmitters whose signal can be evaluated by the position determination device (58) to determine the current position of the mobile apparatus (50).

14. A safety system (10, 50) in accordance with claim 12 or claim 13,
wherein the sensor data interface (23) and the handheld device data interface (68) are wired interfaces, in particular Ethernet interfaces, or wireless interfaces, in particular Bluetooth, WLAN or mobile telephony interfaces, and/or wherein the system (10, 50) has a docking station for the mobile apparatus (50) to charge a power supply or to synchronise software, and/or wherein the handheld device control (66) is configured so that the apparatus (50) can serve as an operator interface for the sensor (10) during operation even after the end of the configuration.

15. A safety system (10, 50) in accordance with any one of the claims 12 to 14,
wherein a display (56) is provided, in particular data spectacles, to display defined part zones or possible part zones to be defined, in particular superimposed with a direct view of the spatial zone (14) by transparent zones of the data spectacles, or with an electronic representation of the spatial zone (14) from a selectable perspective.

16. A method of configuring part zones of a spatial zone (14) for the monitoring for object intrusions and the association of an object intrusion with a part zone by means of an optoelectronic sensor (10), wherein boundary points, boundary lines or boundary surfaces of the part zones are configured,
**characterised in that**
a mobile apparatus (50) which is connected to the sensor (10) via a data interface (23, 68) is brought to positions in the spatial zone (14) one after the other which are relevant for the defining of a part zone; **in that** the mobile apparatus (50) and/or the sensor (10) respectively determines or determine positional data of the current position of the mobile apparatus (50) in response to an operator input; and **in that** the sensor (10) and/or the mobile apparatus (50) each defines a boundary point, a boundary line or a boundary surface of a part zone on the basis of a selection of the positional data, wherein only positions can be configured for which a reference target (62) at the handheld device, namely the handheld device (50), is visible for the sensor (10) during the configuration.

17. A method in accordance with claim 16,
wherein the part zones can be defined as protected zones, warning zones, muting zones or blanking zones and wherein, in response to a detection of an unauthorised intrusion,
- a danger source in a protected zone is secured;
- a warning is output in a warning zone;
- a safety function is at least temporarily suppressed in a muting zone; and
- no securing takes place in a blanking zone within a protected zone.

18. A method in accordance with claim 16 or claim 17,
wherein the configured part zones are tested in that intrusions are carried out into the part zones and the reaction of the sensor (10) is checked, and wherein the test object is in particular the mobile apparatus (50).

19. A method in accordance with any one of the claims 16 to 18, wherein the configured part zones are reworked, corrected and/or released in an independent processor and/or in the sensor (10) after the configuration in the mobile apparatus (50).

20. A method in accordance with any one of the claims 16 to 19, wherein the mobile apparatus (50) is moved by an operator in the configuration or is fastened to a vehicle, to a robot (24) or to a machine part.

## Revendications

1. Capteur optoélectronique (10) pour la surveillance d'une zone spatiale (14), qui comprend une interface de données de capteur (23), une commande de capteur (22) et un récepteur de lumière (12, 12'), dans lequel la commande de capteur (22) est réalisée pour reconnaître, à partir des signaux reçus du récepteur de lumière (12, 12'), des interventions dans la zone spatiale (14) et d'associer les interventions à des zones partielles de la zone spatiale (14), et dans lequel le capteur (10) comprend un système de configuration (21) afin de fixer des points limites, des lignes limites ou des surfaces limites des zones partielles,
**caractérisé en ce que**
le système de configuration (21) est réalisé pour recevoir, via l'interface de données de capteur (23), des données de position d'un appareil manuel (50) dans la zone spatiale (14), ou bien pour obtenir une instruction de déterminer des données de position sur la position actuelle de l'appareil manuel (50) dans la zone spatiale, et **en ce que** le système de configuration (21) est en outre réalisé pour fixer, en se basant sur les données de position, un point limite, une ligne limite ou une surface limite d'une zone partielle, et dans lequel il n'est possible de configurer que des positions pour lesquelles une cible de référence (62) sur l'appareil manuel, à savoir l'appareil manuel (50), est visible pour le capteur (10) pendant la configuration

2. Capteur (10) selon la revendication 1,
dans lequel il est prévu un système d'avertissement et de sécurisation (28) qui, sur détection par la commande de capteur (22) d'une intervention inadmissible dans une zone partielle, peut fournir un avertissement ou sécuriser la source de danger (24), et dans lequel la commande de capteur (22) et le système de configuration (21) sont réalisés pour fixer des zones partielles comme des zones protégées, des zones d'avertissement, des zones de silence ou des zones d'extinction.

3. Capteur (10) selon la revendication 1 ou 2,
dans lequel le capteur (10) comprend un capteur d'imagerie en forme de ligne ou de matrice à résolution par pixel, en particulier un capteur 3D visuel d'après le principe de la stéréoscopie, de la triangulation active ou du temps de parcours de la lumière, ou dans lequel le capteur (10) est un scanner à laser.

4. Capteur (10) selon l'une des revendications précédentes,
dans lequel le capteur (10) comprend un moyen de test de résolution (22) qui est réalisé pour vérifier si une cible de référence (62) sur l'appareil manuel (50) peut encore être résolue sur le plan optique, et dans lequel le moyen de test de résolution (22) est en outre réalisé pour fournir, directement par signal optique ou acoustique ou via l'interface de données de capteur (23), un avertissement à l'appareil manuel (50) si la cible de référence (62) ne peut pas être résolue, en particulier dans une zone partielle à déterminer.

5. Appareil mobile (50), en particulier appareil manuel, pour la configuration de zone partielle de la zone visible (14) d'un capteur optoélectronique (10), qui comprend une interface de données d'appareil manuel (68) pour l'échange de données avec le capteur (10) et une commande d'appareil manuel (66), dans lequel l'appareil comprend un système de détermination de position (58) qui est réalisé pour déterminer des données de position sur la position actuelle respective de l'appareil (50) dans l'espace, ou pour les faire déterminer par le capteur (10) au moyen d'un échange de données et d'instructions, **caractérisé par**
un moyen de sélection de données de position (52, 54, 60) qui est réalisé pour sélectionner au moins une position à partir des données de position et transmettre celle-ci à la commande de l'appareil manuel (66), la commande de l'appareil manuel (66) étant réalisée pour fixer, en se basant sur ladite au moins une position, un point limite, une ligne limite ou une surface limite d'une zone partielle, et l'appareil (50) comporte une cible de référence (62), dont l'extension correspond à une capacité de résolution souhaitée du capteur (10), et dont la taille correspond à un stade de sécurité souhaité, en particulier pour la protection d'un corps, la protection d'un bras ou la protection d'un doigt, et il n'est possible de configurer que des positions pour lesquelles la cible de référence (62), à savoir l'appareil manuel (50), est visible pour le capteur (10) pendant la configuration.

6. Appareil mobile (50) selon la revendication 5,
dans lequel le moyen de détermination de position (58) est réalisé pour déterminer des données de position à chaque fois en réponse à une entrée d'un utilisateur ou à un signal du capteur (10), et/ou dans lequel le moyen de détermination de position (58) peut déterminer la position actuelle à chaque fois pour un point ou en continu le long de tronçon du trajet de déplacement de l'appareil (50), et dans lequel la commande de l'appareil manuel (66) est réalisée pour fixer une ligne limite ou une surface limite d'une zone partielle le long de la liaison entre les points, le long des tronçons du trajet de déplacement, comme étant leur enveloppe convexe respective, ou à titre de forme géométrique simple la plus petite, en particulier de cercle, de sphère, de rectangle, de parallélépipède ou de cylindre, qui englobe un certain nombre de points ou un tronçon du trajet de déplacement.

7. Appareil mobile (50) selon la revendication 5 ou 6,
dans lequel le moyen de détermination de position (58) comprend un récepteur électromagnétique (58, 64, 62) afin de déterminer la position actuelle de l'appareil au moyen de signaux électromagnétiques externes, et/ou dans lequel le moyen de détermination de position (58) est relié à l'interface de données de l'appareil manuel (68) afin de recevoir la position actuelle de l'appareil (50) depuis le capteur (10).

8. Appareil mobile (50) selon l'une des revendications 5 à 7,
dans lequel la cible de référence (62) est une sphère avec un rayon prédéterminé, et dans lequel la cible de référence (62) est montée de manière interchangeable sur l'appareil (50).

9. Appareil mobile (50) selon l'une des revendications 5 à 8,
dans lequel l'appareil (50) comporte un moyen de sélection (52, 54) qui permet la sélection d'une forme géométrique pour une zone partielle, en particulier un cercle, une sphère, un rectangle, un parallélépipède ou un cylindre, afin de fixer une zone partielle avec la forme géométrique à la position actuelle, et/ou qui permet la sélection d'un type d'une zone partielle, en particulier d'une zone de protection, d'une zone d'avertissement, d'une zone de silence ou d'une zone d'extinction.

10. Appareil mobile (50) selon l'une des revendications 5 à 9,
dans lequel l'appareil (50) comporte un moyen d'identification (70) qui est réalisé pour libérer la fonctionnalité de l'appareil (50) au moins partiellement seulement après authentification, en particulier au moyen d'un mot de passe, d'un signal acoustique ou d'un signal biométrique.

11. Appareil mobile (50) selon l'une des revendications 5 à 10,
dans lequel l'appareil (50) comporte un affichage (50), en particulier un branchement pour des lunettes dites "smart glasses", afin d'afficher des zones partielles déjà définies ou qu'il s'agit de définir actuellement, et/ou d'afficher des possibilités de manipulation ou de sélection.

12. Système de sécurité (10, 50) comprenant un capteur (10) selon l'une des revendications 1 à 4, et un appareil mobile (50) selon l'une des revendications 5 à 11.

13. Système de sécurité (10, 50) selon la revendication 12,
dans lequel le système (10, 50) comprend des émetteurs électromagnétiques, dont le signal peut être évalué pour par le moyen de détermination de position (58), afin de déterminer la position actuelle de l'appareil mobile (50).

14. Système de sécurité (10, 50) selon la revendication 12 ou 13,
dans lequel l'interface de données de capteur (23) et l'interface de données de l'appareil manuel (68) sont des interfaces à liaison filaire, en particulier des interfaces Ethernet, ou des interfaces sans fil, en particulier des interfaces Bluetooth, Wifi ou de radiotéléphonie mobile, et/ou dans lequel le système (10, 50) comprend une station d'accostage ("docking station") pour l'appareil mobile (50), afin de recharger une alimentation électrique ou de synchroniser le logiciel, et/ou dans lequel la commande d'appareil manuel (66) est réalisée pour que l'appareil (50) puisse servir d'interface utilisateur pour le capteur (10) pendant le fonctionnement, également après terminaison de la configuration.

15. Système de sécurité (10, 50) selon l'une des revendications 12 à 14, dans lequel il est prévu un affichage (56), en particulier des lunettes dites "smart glasses", afin d'afficher des zones partielles fixées ou des zones partielles éventuelles à fixer, en particulier en superposition avec une vision directe de la zone spatiale (14) à travers des zones transparentes des lunettes, ou bien avec une représentation électronique de la zone spatiale (14) depuis une perspective à choisir.

16. Procédé pour la configuration de zone partielle d'une zone spatiale (14) pour la surveillance vis-à-vis d'interventions d'objets et pour l'association de l'intervention d'un objet à une zone partielle, au moyen d'un capteur optoélectronique (10), dans lequel on configure des points limites, des lignes limites ou les surfaces limites des zones partielles, **caractérisé en ce que**,
un appareil mobile (50), qui est relié au capteur (10) via une interface de données (23, 68), est amené dans la zone spatiale (14) successivement à des positions qui sont pertinentes pour la fixation d'une zone partielle,
l'appareil mobile (50) et/ou le capteur (10) détermine, à chaque fois sur instruction d'un utilisateur, des données de position concernant la position actuelle de l'appareil mobile (50), et
le capteur (10) et/ou l'appareil mobile (50) fixent respectivement un point limite, une ligne limite ou une surface limite d'une zone partielle, en se basant sur une sélection des données de position,
dans lequel on ne peut configurer que des positions pour lesquelles une cible de référence (62) sur l'appareil manuel, à savoir l'appareil manuel (50), est visible pour le capteur (10) pendant la configuration.

17. Procédé selon la revendication 16,
dans lequel les zones partielles peuvent être déterminées comme étant des zones de protection, des zones d'avertissement, des zones de silence ou des zones d'extinction, et dans lequel suite à la détection d'une intervention inadmissible
- dans une zone de protection, on sécurise une source de danger,
- dans une zone d'avertissement, on délivre un avertissement,
- dans une zone de silence, on court-circuite au moins temporairement une fonction sécurité, et
- dans une zone d'extinction à l'intérieur d'une zone de protection, on ne procède à aucune sécurisation.

18. Procédé selon la revendication 16 ou 17,
dans lequel les zones partielles configurées sont testées, en ce que l'on procède à des interventions dans les zones partielles et l'on contrôle la réaction du capteur (10), et l'objet de test est ici en particulier l'appareil mobile (50).

19. Procédé selon l'une des revendications 16 à 18,
dans lequel, après la configuration dans l'appareil mobile (50), les zones partielles configurées sont remodelées, corrigées et/ou libérées dans un calculateur indépendant et/ou dans le capteur (10).

20. Procédé selon l'une des revendications 16 à 19,
dans lequel, pendant la configuration, l'appareil mobile (50) est déplacé par le personnel de service, ou bien est fixé sur un véhicule, sur un robot (24) ou encore sur une partie de machine.
